# EUROPEAN PATENT APPLICATION

(11) **EP 2 284 175 A1**
(43) Date of publication of application: **16.02.2011**
(21) Application number: 10012479.1
(22) Date of filing: 12.04.2006
(51) Int. Cl.: C07F 7/08, C08G 77/04

(54) **Process for making SI-H functional siloxane oligomer**

(30) Priority: 20.04.2005 PL 37451905
(62) Divisional of application: 06749904.6
(71) Applicant: General Electric Company, Schenectady, NY 12345 (US)
(72) Inventor: Rubinsztajn, Slawomir, Nisakyuna New York 12309 (US); Fortuniak, Witold, 94003 Lodz (PL); Chojnowski, Julian, 94011 Lodz (PL); Kurjata, Jan, 91495 Lodz (PL)
(74) Representative: Thoma, Michael

(57) **Abstract**

The present invention relates to a method of making a Si-H functional siloxane oligomer from the reaction between silicon hydride compounds and cyclic siloxane oligomer in the presence of a Lewis acid that is capable of interacting with the hydrogen of the silicon hydride to promote ring opening of the cyclic siloxane oligomer and the insertion a siloxane oligomer segment between Si and H atom to thereby form the Si-H functional siloxane oligomer.

## Description

The present invention relates to a method of making Si-H functional siloxane oligomers from the reaction between a silicon hydride compound and a cyclic siloxane oligomer in the presence of a Lewis acid that is capable of interacting with the hydrogen of the silicon hydride to promote a ring opening of the cyclic siloxane oligomer thereby facilitating the insertion of a siloxane oligomer segment between Si and H atoms to form the Si-H functional siloxane oligomers.

### BACKGROUND OF THE INVENTION

Si-H functional siloxane oligomers are an important class of siloxane intermediates that have a broad range of industrial applications including, but not limited to, precursors for preparation of organofunctional siloxane oligomers, chain extenders and crosslinkers. Oligomers are generally a short chain polymer molecule consisting of only a small plurality of monomer units, e.g., dimer, trimer, and even dodecamer. Typical processes to make such Si-H functional siloxane oligomers include cohydrolysis of chlorosilanes, heterocondensation of organofunctional silanes, cationic polymerization of cyclosiloxanes in the presence of tetramethyldisiloxane as a chain stopper or by end-capping of silanol stopped oligosiloxanes with dimethylchlorosilane. Such current processes to make Si-H functional siloxane oligomers' produce siloxane oligomers with high polydispersity. To date it has been difficult to prepare mono-Si-H functional or telechelic Si-H functional siloxane oligomers or siloxane oligomers with narrow polydispersity.

One process to produce Si-H functional siloxane oligomers with narrow polydispersity is an anionic ring opening polymerization of hexamethylcyclotrisiloxanes and subsequent quenching of lithium silanolate with chlorodimethylsilane. However, this process is very difficult to conduct at an industrial scale.

In spite of the foregoing developments, there is a continuing search for new reaction for preparing Si-H functional siloxane oligomers that will improve reaction's polydispersity.

### SUMMARY OF THE INVENTION

The present invention relates to a method of making a Si-H functional siloxane oligomers from the reaction between silicon hydride compounds and cyclic siloxane oligomer in the presence of a Lewis acid capable of interacting with the hydrogen of the silicon hydride and having the ability to promote the ring opening of the cyclic siloxane oligomer and its insertion between Si and H atoms to thereby form the Si-H functional siloxane oligomer.

Thus, the present invention provides for a process for making Si-H functional siloxane oligomer by a telomerization reaction. The telomerization reaction method includes providing: (a) a silicon hydride or Si-H functional siloxane, (b) a cyclic siloxane oligomer, and (c) a Lewis acid. The Lewis acid is capable of interacting with the H of the silicon hydride to promote the ring opening of the cyclic siloxane oligomer thereby facilitating the insertion of a siloxane oligomer segment between Si and H atoms to form the Si-H functional siloxane oligomer. The siloxane oligomer segment is generally a short chain polymer molecule including a small plurality of monomer units, e.g., dimer, trimer, tretramer, and even up to dodecamer.

Further, the processes for making the Si-H functional siloxane oligomers of the present invention may be used in or to provide for the production of compositions such as, for example, siloxane foams, siloxane coating, hyperbranched silicone polymers, cross-linked siloxane networks and gels as well as other silicone and siloxane molecules exemplified herein.

### DETAILED DESCRIPTION OF THE INVENTION

The present invention represents the discovery of a new type of reaction for silicon hydride bearing molecules to produce a Si-H functional siloxane oligomer. Generally, the reaction may be characterized as between a silicon hydride moiety with a cyclic siloxane oligomer compound. This reaction may be characterized as a telomerization reaction.

Useful silicon hydride compounds for the present invention include but are not limited to trialkylsilanes, dialkylarylsilanes, alkyldiarylsilanes, triarylsilanes, dialkylsilanes, alkylarylsilanes, diarylsilanes, alkylsilanes, arylsilanes, and mixtures thereof, such as, for example, trimethylsilane (Me₃SiH), triethylsilane (Et₃SiH), diphenylmethylsilane (Ph₂MeSiH), phenyldimethylsilane (PhMe₂SiH), dimethylsilane (Me₂SiH₂), diethylsilane (Et₂SiH₂), diphenylsilane (Ph₂SiH₂), methylsilane (MeSiH₃), phenylsilane (PhSiH₃) and mixtures thereof. Useful siloxanes for the present invention include but are not limited to linear and/or branched alkylpolysiloxanes, arylpolysiloxanes, alkylarylpolysiloxanes, and mixtures thereof, such as, for example, 1,1,3,3-tetramethyldisiloxane (HSiMe₂OSiMe₂H), 1,1,3,3-tetraphenyldisiloxane (HSiPh₂OSiPh₂H), 1,1,5,5-tetramethyl-3,3-diphenyl-trisiloxane (HSiMe₂OSiPh₂OSiMe₂H), pentamethyldisiloxane (SiMe₃OSiMe₂H), tris(dimethylsiloxy)methylsilane (MeSi(OSiMe₂H)₃), tris(dimethylsiloxy)phenylsilane (PhSi(OSiMe₂H)₃), tetrakis(dimethylsiloxy)silane (Si(OSiMe₂H)₄) and mixtures thereof.

Examples of cyclic siloxane oligomer compounds include, but are not limited to alkylcyclopolysiloxanes, arylcyclopolysiloxanes, alkylarylcyclopolysiloxanes, and mixtures thereof, such as, for example, hexamethylcyclotrisiloxane, trimethylcyclotrisiloxane, triphenyl-trimethylcyclotrisiloxane hexaphenylcyclotrisiloxane and trimethyl-tris(trifluoropropyl)cyclotrisiloxane.

Cyclic siloxane oligomers are generally represented as 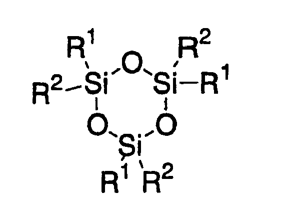 where R¹ and R² may be independently selected from hydrogen or the group of one to twelve carbon atom monovalent hydrocarbon radicals that may or may not be substituted with halogens (halogen being F, Cl, Br and I), e.g., non limiting examples being fluoroalkyl substituted or chloroalkyl substituted. 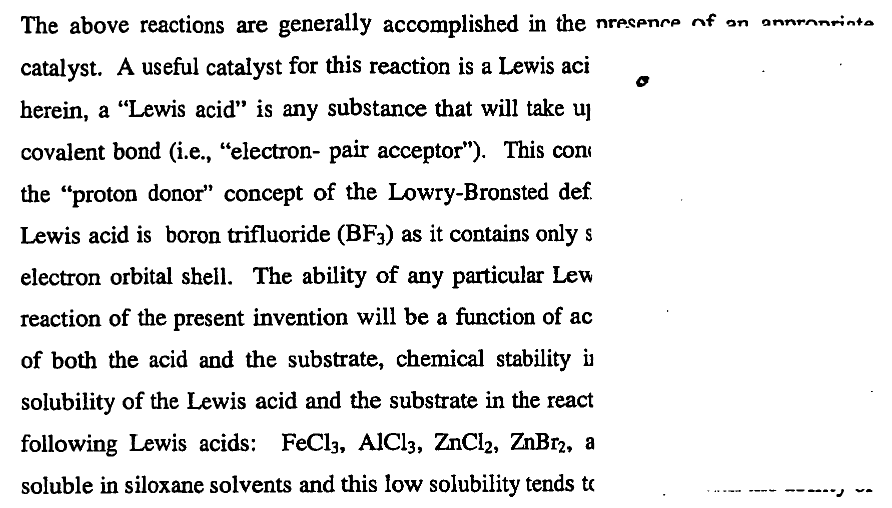 these particular Lewis acid catalysts to catalyze the desired reaction. Lewis acid catalysts having a greater solubility in siloxane media are more useful and include Lewis acid catalysts of Formula (I)

MR³ₓX_{y} (I)

wherein M is B, Al, Ga, In or Tl; each R³ is independently the same (identical) or different and represent a monovalent aromatic hydrocarbon radical having from 6 to 14 carbon atoms, such monovalent aromatic hydrocarbon radicals may have at least one electron-withdrawing element or group such as, for example, -CF₃, -NO₂ or - CN, or substituted with at least two halogen atoms; X is a halogen atom; x is 1, 2, or 3; and y is 0, 1 or 2; with the proviso that x + y =3. Particularly useful Lewis acid catalysts include Lewis acid catalysts of Formula (II)

BR³ₓX_{y} (II)

wherein each R³ are independently the same (identical) or different and represent a monovalent aromatic hydrocarbon radical having from 6 to 14 carbon atoms, such monovalent aromatic hydrocarbon radicals preferably having at least one electron-withdrawing element or group such as -CF₃, -NO₂ or -CN, or substituted with at least two halogen atoms; X is a halogen atom; x is 1, 2, or 3; and y is 0, 1 or 2; with the proviso that x + y =3. To the end, applicants have been fond that B(C₆F₅)₃ is suitable catalyst.

The process of the present invention utilizes a Lewis acid catalyst concentration that ranges from about 1 part per million by weight (wppm) to about 10 weight percent (based on the total weight of siloxanes being reacted and the equals 100,000 wppm). Thus, one suitable Lewis acid catalyst concentration range is from about 10 part per million by weight (wppm) to about 5 weight percent (50,000 wppm). Another suitable Lewis acid catalyst concentration range is from about 50 wppm to about 10,000 wppm. Yet another suitable Lewis acid catalyst concentration range is from about 50 wppm to about 5,000 wppm.

The telomerization reaction can be done without solvent or in the presence of solvents. The presence of solvents may be beneficial due to an increased ability to control viscosity, rate of the reaction and exothermicity of the process. Suitable solvents include aliphatic hydrocarbons, aromatic hydrocarbons, halogenated hydrocarbons, as well as oligomeric diorganosiloxanes such as hexamethyldisiloxane and octamethylcyclotetrasiloxane.

The telomerization reaction between the (≡ Si-H) moiety and the cyclic siloxane moiety can be conducted at an ambient or at an elevated temperature depending on the chemical structures of reagents and catalysts, concentration of catalyst and used solvent.

This telomerization reaction is generally accomplished in the presence of a Lewis acid catalyst, such as those described herein. Applicants have been fond that B(C₆F₅)₃ is suitable catalyst. This process may occur at room temperature or at elevated temperatures. The catalyst concentration is as described previously.

The Si-H functional siloxane oligomer produced according to the method or process of this invention are useful intermediates in the field of siloxane elastomers, siloxane coatings, insulating materials and cosmetic products.

It is to be noted that silicon is a tetravalent element and for purposes of descriptive convenience herein, not all four bonds of the silicon atom have been described in some of the abbreviated chemical reaction scenarios used to explain the reaction chemistry involved in the formation of non-hydrolytic silicon oxygen bonds. Where silicon is hypovalent or hypervalent in terms of its customary stereochemistry, the full structure has been indicated.

The following is a general description of the telomerization of the reactant products of the present invention. The reaction between hydrosilanes and hexamethylcyclotrisiloxane proceeds as a complex telomerization process. Reaction of Et₃SiH proceeds slowly and eventually leads to many products because the first telomer is formed slowly and consecutive reactions of the first telomer dominates the pattern of the process.

In the case of more reactive PhMe₂SiH the reaction with hexamethylcyclotrisiloxane leads to a formation of relatively high concentration of the first telomer

PhMe₂SiH + (Me₂SiO)₃ → PhMe₂Si((OSiM₂)₃H

The first telomer may further react with hexamethylcyclotrisiloxane giving a second telomer

PhMe₂Si(OSiM₂)₃ → PhMe₂Si((OSiM₂)₆H

### EXPERIMENTAL

Experimental Procedure: Reactions of the following examples were performed in a glass 10 ml reactor equipped with magnetic stirrer and a three-way glass stopcock connected to a nitrogen gas circulating system fitted with bubbler. The reactor was thermostated on a silicone oil bath. The reactor was purged with nitrogen and known amounts of substrates and gas chromatographic standard were introduced by means of tight precision Hamilton syringes using the three-way stopcock through which nitrogen was flowing. The zero sample was withdrawn by a Hamilton syringe and known amount of the solution of B(C₆F₅)₃ in toluene was introduced to reaction mixture. Samples were withdrawn at time interval and introduced to Eppendorfer vessels containing 4-ethylpyridine used for the quenching of the reaction. Time of the introduction of the sample to the amine was considered as the time of reaction. The chemical composition of the reaction mixture was established by gas chromatography analysis.

Example 1. Reaction of hexamethylcyclotrisiloxane (D₃) with PhMe₂SiH. This reaction was carried out in substantially accordance with the Experimental Procedure described above. 1.60g of D₃ was sublimed on a high vacuum line into the reactor to which 2.93g of PhMe₂SiH reagent. 0.0517 of toluene solution containing 1.01x10⁻⁴ mol of B(C₆F₅)₃ catalyst such that [B(C₆Fₛ)₃] was 1.87x10⁻² molkg⁻¹ solution was introduced by means of a precision Hamilton syringe. Temperature of the reaction was 24.2°C. Results are shown in Table 1.

**Table 1 - Results of Example 1**

| | Time (s) | D₃ Rel Int | D₃ % conv | PhMe₂SiH Rel Int | PhMe₂SiH % conv | 1^{st} Telomer PhMe₂Si(OSi)₃H Rel Int |
|---|---|---|---|---|---|---|
| 1 | 0 | 3.21 | 0 | 6.92 | 0 | 0 |
| 2 | 20 | 3.12 | 3 | 6.36 | 8 | 0.064 |
| 3 | 90 | 2.78 | 13.5 | 6.15 | 11 | 0.140 |
| 4 | 210 | 2.36 | 26.5 | 6.12 | 11.5 | 0.38 |
| 5 | 360 | 1.83 | 43 | 5.72 | 17.5 | 0.64 |
| 6 | 640 | 1.18 | 63 | 5.11 | 26 | 0.92 |
| 7 | 1200 | 0.451 | 86 | 4.29 | 38 | 0.84 |
| 8 | 2400 | 0.180 | 94.5 | 3.56 | 48.5 | 0.62 |
| 9 | 5000 | 0.045 | 98.6 | 3.49 | 49.0 | 0.397 |
| 10 | 22700 | minor | >99.5 | 3.53 | 49.5 | 0.333 |
| 11 | 29500 | minor | >99.5 | 3.14 | 55 | 0.315 |

Example 2. Reaction of hexamethylcyclotrisiloxane (D₃) with PhMe₂SiH. This reaction was carried out in substantially accordance with the Experimental Procedure described above. 1.19g of D₃ was sublimed on a high vacuum line into the reactor to which 0.796g of PhMe₂SiH reagent and 2.42x10⁻² molkg⁻¹ of B(C₆F₅)₃ catalyst were added. Temperature of the reaction was 25°C. The reaction was monitored by GC and the results are shown in Table 2.

**Table 2 - Results of Example 2**

| | Time (s) | D₃ Rel Int | D₃ % conv | PhMe₂SiH Rel Int | PhMe₂SiH % conv | 1^{st} Telomer PhMe₂Si(OSi)₃H Rel Int | 2nd Telomer PhMe₂Si(OSi)₆H Rel Int |
|---|---|---|---|---|---|---|---|
| 1 | 0 | 3.08 | 0 | 2.53 | 0 | 0 | 0 |
| 2 | 29 | 2.86 | 7.1 | 2.13 | 15.9 | 0.041 | 0 |
| 3 | 110 | 2.67 | 13.4 | 2.02 | 20 | 0.111 | 0 |
| 4 | 200 | 2.44 | 20.6 | 1.96 | 22.4 | 0.204 | 0 |
| 5 | 320 | 2.33 | 24.4 | 1.72 | 32.1 | 0.345 | 0 |
| 6 | 540 | 1.98 | 35.8 | 1.53 | 39.5 | 0.501 | minor |
| 7 | 1200 | 1.24 | 59.7 | 1.03 | 59.4 | 0.661 | 0.092 |
| 8 | 2400 | 0.565 | 81.7 | 0.653 | 74.3 | 0.540 | 0.149 |
| 9 | 3600 | 0.235 | 92.4 | 0.522 | 79.4 | 0.312 | 0.164 |
| 10 | 6700 | 0.046 | 98.5 | 0.498 | 80.3 | 0.099 | 0.078 |
| 11 | 10800 | 0.045 | 98.5 | 0.496 | 80.4 | 0.100 | 0.079 |
| 12 | 22500 | 0.032 | 99.0 | 0.395 | 84.4 | 0.059 | 0.047 |

Example 3. Reaction of hexamethylcyclotrisiloxane (D₃) with 1,1,3,3-tetramethyldisiloxane (^{H}MM^{H}) The reaction of D₃ with ^{H}MM^{H} was performed in concentrated toluene solution using equimolar ratio of substrates and using an excess of D₃. Amounts of the specific ingredients are set forth in Table 3 for Examples 3a and 3b. The reaction was carried out in room temperature under nitrogen in a 10 ml thermostated reactor equipped with magnetic stirrer and a three way glass stopcock connected to a nitrogen gas circulating system fitted with bubbler. An amount of D₃ was sublimed on a high vacuum line into the reactor which was then filled with nitrogen gas and an amount of ^{H}MM^{H}, of ABCR(97%) purified by keeping over fresh CaH₂, dodecane and prepurified toluene were placed in the reactor by means of Hamilton syringes under positive pressure of nitrogen. An amount of the stock solution of the catalyst, B(C₆F₅)₃, in toluene was introduced by a precision Hamilton syringe. The time of the catalyst introduction was considered as the zero time of the reaction. Samples were withdrawn by means of Hamilton syringe and analyzed by gas chromatography (GC). Results for Examples 3a and 3b are found in Tables 4 and 5.

**Table 3 - Reactants composition for Examples 3a and 3b.**

| Example | D₃ | ^{H}MM^{H} | C₁₂H₂₆ | Toluene | B(C₆F₅)₃ |
|---|---|---|---|---|---|
| 3a | 2.92g 1.67 molkg⁻¹ | 1.73g 1.64 molkg⁻¹ | 0.17g 1.27 molkg⁻¹ | 3.03g | 1.27x10⁻³ molkg⁻¹ |
| 3b | 1.884g 1.904 molkg⁻¹ | 0.389g 0.651 molkg⁻¹ | 0.221g 0.292 molkg⁻¹ | 1.73g | 9.67x10⁻³ molkg⁻¹ |

**Table 4 - Results of Example 3a.**

| | Time (s) | [D₃] molkg⁻¹ | [^{H}MM^{H}] molkg⁻¹ | ^{H}MDM^{H} | ^{H}MD₂M^{H} | ^{H}MD₃M^{H} | cyclics |
|---|---|---|---|---|---|---|---|
| 1 | 0 | 1.635 | 1.668 | - | - | - | - |
| 2 | 26 | 0.678 | 1.454 | 0.375 | 0.197 | 0.1086 | 0.0147 |
| 3 | 52 | 0.412 | - | 0.435 | 0.241 | 0.1511 | 0.0243 |
| 4 | 102 | 0.241 | 1.319 | 0.518 | 0.292 | 0.190 | 0.0312 |
| 5 | 156 | 0.1285 | 1.180 | 0.515 | 0.304 | 0.199 | 0.0362 |
| 6 | 232 | 0.1073 | - | 0.507 | 0.309 | 0.2021 | 0.0667 |
| 7 | 317 | 0.0725 | 1.104 | 0.405 | 0.268 | 0.1907 | 0.0927 |
| 8 | 539 | 0.0527 | 0.983 | 0.387 | 0.2775 | 0.1611 | 0.1148 |
| 9 | 800 | 0.0413 | 0.925 | 0.345 | 0.2626 | 0.1548 | 0.0156 |
| 10 | 1130 | 0.0447 | 0.899 | 0.328 | 0.2624 | 0.1310 | 0.188 |
| 11 | 3560 | 0.0281 | 0.497 | 0.1374 | 0.1964 | 0.0271 | 0.250 |
| 12 | 6200 | 0.0053 | 0.245 | 0.0053 | 0.1277 | 0.0105 | 0.276 |
| 13 | 84000 | - | - | 0.0006 | 0.0241 | - | - |

**Table 5 - Results of Example 3b.**

| | Time (s) | [^{H}MM^{H}] molkg⁻¹ | [D₃] molkg⁻¹ | ^{H}MDM^{H} | ^{H}MD₂M^{H} | ^{H}MD₃M^{H} | ^{H}MD₄M^{H} | ^{H}MD₅M^{H} | ^{H}MD₆M^{H} |
|---|---|---|---|---|---|---|---|---|---|
| 1 | 0 | 0.651 | 1.904 | - | - | - | - | - | - |
| 2 | 21 | 0.335 | 1.742 | 0.0494 | 0.0406 | 0.0415 | 0.0074 | - | - |
| 3 | 77 | 0.144 | 1.612 | 0.1188 | 0.0806 | 0.1112 | 0.0107 | - | - |
| 4 | 160 | 0.0629 | 1.547 | 0.1235 | 0.0895 | 0.1327 | 0.0160 | 0.0056 | 0.0042 |
| 5 | 265 | 0.0288 | 1.561 | 0.1365 | 0.1081 | 0.1421 | 0.0222 | 0.0093 | 0.0072 |
| 6 | 372 | 0.0226 | 1.413 | 0.107 | 0.0964 | 0.1246 | 0.0246 | 0.0120 | 0.0096 |
| 7 | 487 | 0.0150 | 1.369 | 0.1028 | 0.1031 | 0.1144 | 0.0281 | 0.0154 | 0.0121 |
| 8 | 782 | 0.0119 | 1.358 | 0.0949 | 0.1074 | 0.0848 | 0.0332 | 0.0222 | 0.0161 |
| 9 | 1105 | 0.0099 | 1.252 | 0.0781 | 0.1028 | 0.0590 | 0.0384 | 0.0301 | 0.0185 |
| 10 | 2130 | - | 1.355 | 0.0825 | 0.1276 | 0.0170 | 0.0504 | 0.0502 | 0.0204 |
| 11 | 50000 | - | 1.252 | 0.0781 | 0.1028 | 0.059 | 0.0284 | 0.0301 | 0.0185 |

Comparative Example 4. Reaction of octamethylcyclotrisiloxane (D₄) with PhMe₂SiH. This reaction was carried out substantially in accordance with the Experimental Procedure described above. 2.87g of D₄ and 1.31g of PhMe₂SiH were added by means of Hamilton syringes under positive pressure of nitrogen into the reactor. Subsequently, 0.0556g (2.17x10⁻² molkg⁻¹) of B(C₆F₅)₃ catalyst was added. Temperature of the reaction was 25°C. The reaction was monitored by GC. The conversions of Si-H and D₄ as well as the formation of the expected siloxane oligomers were not observed even after 20hrs.

The foregoing examples and description are merely illustrative of the invention, serving to illustrate only some of the features of the present invention. The appended claims are intended to claim the invention as broadly as it has been conceived and the examples herein presented are illustrative of selected embodiments from a manifold of all possible embodiments. Accordingly it is Applicants' intention that the appended claims are not to be limited by the choice of examples utilized to illustrate features of the present invention. As used in the claims, the word "comprises" and its grammatical variants logically also subtend and include phrases of varying and differing extent such as for example, but not limited thereto, "consisting essentially of" and "consisting of." Where necessary, ranges have been supplied, those ranges are inclusive of all sub-ranges there between. It is to be expected that variations in these ranges will suggest themselves to a practitioner having ordinary skill in the art and where not already dedicated to the public, those variations should where possible be construed to be covered by the appended claims. It is also anticipated that advances in science and technology will make equivalents and substitutions possible that are not now contemplated by reason of the imprecision of language and these variations should also be construed where possible to be covered by the appended claims. All United States patents referenced herein, if any, are herewith and hereby specifically incorporated by reference.

## Claims

1. A Si-H functional siloxane oligomer prepared by the method defined in any one of claims 3-15.

2. Any one of an intermediate for a siloxane elastomers, an intermediate for an insulating material, an insulating material, an intermediate for a cosmetic product, a cosmetic product, a siloxane foam, a siloxane coating, a hyperbranched silicone polymer, across-linked siloxane network, and a gel prepared by using Si-H functional siloxane oligomer prepared according to claim 1.

3. A process for making a Si-H functional siloxane oligomer, the method comprising the steps of:
a) providing a silicon hydride or Si-H functional siloxane;
b) providing a cyclic siloxane oligomer; and
c) providing a Lewis acid that is capable of interacting with the hydrogen of the silicon hydride to promote the ring opening of the cyclic siloxane oligomer thereby facilitating the insertion of polysiloxane segment between Si and H atoms to form the Si-H functional siloxane oligomer.

4. The process of claim 3 wherein the Lewis acid catalyst comprises a compound of the formula:
MR³ₓX_{y}
wherein M is selected from the group consisting of B, Al, Ga, In and Tl; each R³ is independently selected from the group of monovalent aromatic hydrocarbon radicals having from 6 to 14 carbon atoms; X is a halogen atom selected from the group consisting of F, Cl, Br, and I; x is 1, 2, or 3; and y is 0, 1 or 2; subject to the requirement that x + y = 3.

5. The process of claim 3 wherein the Lewis acid catalyst is tri(pentafluorophenyl)boron.

6. The process of claim 3 wherein the concentration of the Lewis acid catalyst ranges from 10 wppm to 50,000 wppm.

7. The process of claim 3 wherein said cyclic siloxane oligomer has the formula 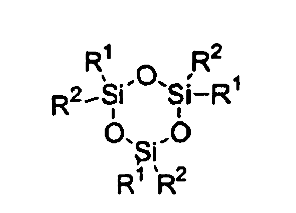 wherein R¹ and R² may be independently selected from hydrogen, a group of one to twelve carbon atom monovalent hydrocarbon radicals, a group of one to twelve carbon atom monovalent hydrocarbon radicals substituted with one or more halogens, and combinations thereof.

8. The process of claim 3 wherein said cyclic siloxane oligomer is selected from the group of cyclic trisiloxane oligomers.

9. The process of claim 3 wherein said cyclic siloxane oligomer is selected from the group consisting of hexamethylcyclotrisiloxane, triphenyltrimethylcyclotrisiloxane and trimethyl-tris(trifluoropropyl)cyclotrisiloxane, hexaphenylcyclotisiloxane.

10. The process of claim 3, wherein said polysiloxane segment is a trisiloxane segment.

11. The process of claim 3, wherein said process is activated by heat.

12. The process of claim 4, wherein
(a) M is boron; or
(b) each R³ is C₆F₅ and x = 3.

13. The process of claim 7 wherein said polysiloxane segment is a trisiloxane segment.

14. The process of claim 3 wherein steps (a)-(c) form a telomer and comprising the additional step of
d) Further reacting the first Si-H functional telomer of step d) with the cyclic siloxane oligomer of step (b).

15. The process of claim 3, wherein said cyclic siloxane oligomer is selected from the group consisting of hexamethyl cyclo trisiloxane, trimethyl cyclo trisiloxane, triphenyl trimethyl cyclo trisiloxane, trimethyl tris (trifluoro propyl) cyclo trisiloxane, and hexaphenyl cyclo trisiloxane, or wherein the Si-H functional siloxane comprises one or more alkyl polysiloxane, aryl polysiloxane or alkylaryl polysiloxane, or wherein one or both of the silicon hydride or Si-H functional siloxane comprises one or more trialkylsilane, dialkylarylsilane, alkyldiarysilane, triarylsilane, dialkylsilane, alkylarysilane, diarysilane, alkylsilane or arylsilane.
